Europäisches Patentamt

(19) European Patent Office

Office européen des brevets

(11) Veröffentlichungsnummer: **0 211 443**
**B1**

(12) **EUROPÄISCHE PATENTSCHRIFT**

(45) Veröffentlichungstag der Patentschrift:
09.08.89

(21) Anmeldenummer: 86110877.7

(22) Anmeldetag: 06.08.86

(51) Int. Cl.⁴: **B01D 53/36**, B01J 21/06,
B01J 23/22, B01J 37/00

(54) Verfahren zum Herstellen eines Katalysators zur selektiven Reduktion von Stickoxiden in Abgasen.

(30) Priorität: 19.08.85 DE 3529608

(43) Veröffentlichungstag der Anmeldung:
25.02.87 Patentblatt 87/9

(45) Bekanntmachung des Hinweises auf die Patenterteilung:
09.08.89 Patentblatt 89/32

(84) Benannte Vertragsstaaten:
AT BE CH DE FR GB IT LI NL SE

(56) Entgegenhaltungen:
DE-A- 2 926 894
DE-A- 3 431 961

(73) Patentinhaber: Siemens Aktiengesellschaft Berlin und München, Wittelsbacherplatz 2, D-8000 München 2(DE)

(72) Erfinder: Schmelz, Helmut, Dr. Dipl.-Phys., Rudolf Sieck 14, D-8210 Prien(DE)

## Beschreibung

Die Erfindung bezieht sich auf ein Verfahren zum Herstellen eines Katalysators zur Reduktion von Stickoxiden in Abgasen nach dem SCR-Verfahren (selective catalytic reduction).

Zur Verminderung der Emission von Stickoxiden aus Anlagen, in denen fossile Brennstoffe verbrannt werden, kommen katalytische Reduktionsverfahren zur Anwendung. Dabei unterscheidet man zwischen den sogenannten nichtselektiven katalytischen Reduktionsverfahren (NSCR-Verfahren) und den selektiven katalytischen Reduktionsverfahren (SCR-Verfahren). Beim SCR-Verfahren werden die im Abgas vorhandenen Stickoxide mittels Ammoniak bei Anwesenheit von molekularen Sauerstoff an einem Katalysator in einem Temperaturbereich von 300 bis 400°C zu Stickstoff reduziert. Die Grundreaktionsgleichungen für die selektive katalytische Reduktion der wichtigsten Stickoxidkomponenten im Abgas lauten:

$$4NO + 4NH_3 + O_2 \longrightarrow 4N_2 + 6H_2O$$
$$2NO_2 + 4NH_3 + O_2 \longrightarrow 3N_2 + 6H_2O.$$

Aus der DE-PS-24 58 888 ist ein Verfahren zur selektiven Reduktion von Stickoxiden in Abgasen bekannt, bei dem der katalytisch aktive Bestandteil des Katalysators aus einer innigen Mischung von Titan in Form von Oxiden und anderen Metallen besteht, die ebenfalls in Form von Oxiden oder Sulfaten vorliegen. Als zweite Komponente von binären Katalysatoren eignen sich besonders die Elemente Eisen, Vanadium, Molybdän, Wolfram, Nickel, Kobald, Kupfer, Chrom und Uran, die in Kombination mit Titan eine hohe katalytische Aktivität und Säurebeständigkeit zeigen. Durch weitere Komponenten, beispielsweise Zinn, wird in erster Linie die Lebensdauer des Katalysators erhöht und der wirksame Temperaturbereich vergrößert. Das für die katalytische Wirkung erforderliche innige Gemisch der Oxide erhält man dadurch, daß das Gemisch geeigneter Vorstufen, in denen die einzelnen Komponenten beispielsweise als Hydroxide oder Oxidhydrate in Form eines wasserhaltigen Gels vorliegen, durch Pyrolyse in die Oxide überführt. Diese Pyrolyse erfolgt beispielsweise nach Formung der Katalysatormasse zur gewünschten Gestalt durch Calcinierung bei erhöhten Temperaturen. Die Katalysatormasse kann dabei vor der Calcinierung auf einen inerten festen Träger, beispielsweise durch Trommelgranulierung aufgebracht werden oder durch Extrudierformung zu einem Vollkeramik-Körper geformt werden. Bei den auf diese Weise hergestellten Katalysatoren ergeben sich jedoch mehrere Nachteile. Die Herstellung des katalytisch aktiven innigen Gemisches der Oxide erfordert eine Temperaturbehandlung bei Temperaturen die höher als 300°C sind. Andererseits findet bei einer Temperatur, die höher als 700°C ist, eine Sinterung statt, die eine Verringerung der aktiven Katalysatoroberfläche verursacht. Somit ist ein hoher Anteil an katalytisch aktiven Bestandteilen stets mit einem Verlust an katalytisch aktiver Oberfläche verbunden. Außerdem wird bei Vollkeramikkatalysatoren, bei denen der Katalysator beispielsweise in Form von Wabenziegeln vorliegt, nur ein kleiner Anteil der Katalysatormasse als katalytisch aktiver Oberflächenanteil wirksam, da das unterhalb der Oberfläche liegende Katalysatormaterial mit dem Abgas nicht in Berührung kommt. Außerdem sind Wabenziegelkatalysatoren hinsichtlich ihrer mechanischen Eigenschaften wegen großer Brüchigkeit nicht zufriedenstellend. Bei einem Katalysator, bei dem das Grundmaterial vor der Calcinierung auf einen Träger, beispielsweise eine Edelstahlfolie, aufgewalzt wird, ergibt sich eine gegenüber Wabenziegelkatalysatoren erhöhte mechanische Festigkeit und ein günstigerer Materialverbrauch. Dennoch liegt noch immer ein ungünstiges Verhältnis zwischen Oberflächenanteil und Volumenanteil der Katalysatormasse vor. Bei den genannten Katalysatoren besteht außerdem die Problematik der Entsorgung, da sie nach etwa 2 bis 4 Jahren durch die im Abgas enthaltenen Katalysatorgifte unwirksam geworden sind und eine Regenerierung nicht möglich ist.

Der Erfindung liegt somit die Aufgabe zugrunde, ein Verfahren zum Herstellen eines Katalysators zur selektiven Reduktion von Stickoxiden in Abgasen anzugeben, mit dem der Katalysator als sehr dünne Schicht mit hoher spezifischer Oberfläche herstellbar und außerdem leicht zu regenerieren ist.

Die genannte Aufgabe wird erfindungsgemäß gelöst mit den kennzeichnenden Merkmalen des Anspruchs I. Die metallischen Bestandteile Titan und Vanadium liegen als Legierung bereits in einem sehr günstigen Mischungszustand vor. Die oberflächennahe Schicht dieser metallischen Legierung wird oxidiert. Durch den günstigen Mischungszustand der metallischen Legierung ist gewährleistet, daß an der Oberfläche katalytisch sehr wirksame Mischoxidformen ausgebildet sind. Die aus Oxidschicht und metallischer Grundlegierung bestehende Katalysatormasse kann in sehr dünnen Schichten hergestellt werden. Dazu wird entweder die metallische Legierung vor der Oxidation zu dünnen Blechen ausgewalzt oder mit einer Schichtdicke von IO bis 200 µm auf einen geeigneten Träger aufgetragen. Wird die oberflächennahe Oxidschicht durch die in Abgasen enthaltenen Katalysatorgifte katalytisch unwirksam, so kann diese durch einen Sandstrahl- oder Ätzvorgang entfernt werden. Die katalytisch wirksame Oxidschicht kann dann durch erneutes Oxidieren wieder hergestellt oder verstärkt werden.

Eine besonders günstige katalytische Wirkung ergibt sich, wenn in der Legierung das Atomverhältnis der Komponente Vanadium zur Komponente Titan zwischen 0,002 und 0,2, vorzugsweise zwischen

2

0,02 und 0,1 beträgt.

Weiterhin ist es vorteilhaft, wenn die Legierung noch wenigstens ein Metall der Gruppe Zinn, Eisen, Kobalt, Chrom, Nickel und Uran enthält. Das Atomverhältnis der Gesamtzahl der Komponenten aus dieser Gruppe zur Komponente Titan beträgt vorzugsweise zwischen 0,002 und 0,2.

Vor der oberflächennahen Oxidation der metallischen Legierung ist es vorteilhaft diese durch Sandstrahlen oder durch Ätzen in Beizlösungen aufzurauhen. Dadurch erhält man spezifische Oberflächen, die zwischen 0,05 und 1 m² pro cm² Grundfläche liegen.

Die Oxidation der metallischen Legierung kann entweder im Sauerstoffstrom bei 300°C bis 500°C oder durch elektrolytische Oxidation erfolgen. Dabei kann die metallische Legierung je nach Behandlungsdauer und Schichtdicke entweder nur im oberflächennahen Bereich oder vollständig aufoxidiert werden.

Besonders dünne Katalysatorschichten können erzeugt werden, wenn die metallische Legierung auf einen geeigneten Träger, beispielsweise ein Blech oder Drahtnetz aus Edelstahl aufgebracht wird. Die Dicke des Trägers liegt dabei zwischen 0,05 und 1 mm, vorzugsweise zwischen 0,1 und 0,5 mm.

Die Beschichtung des Trägers mit der Legierung kann dabei beispielsweise elektrochemisch erfolgen. Zu bevorzugen ist jedoch ein thermisches Spritzverfahren, beispielsweise Plasmaspritzen oder Flammspritzen. Die dabei erzeugten Schichtdicken liegen zwischen 10 μm und 200 μm, vorzugsweise zwischen 20 μm und 100 μm.

Zur Verbesserung der Haftung der Legierung auf dem Träger kann der Träger durch Sandstrahlen oder Ätzen aufgerauht und mit einer Aluminium-Flammspritzschicht versehen werden, die als Haftgrund für die Legierung dient.

Das Trägerblech oder -gitter kann entweder vor oder nach dem Beschichten mit Stehfalzen versehen werden. Diese Stehfalzen erhöhen die mechanische Stabilität und dienen gleichzeitig als Abstandshalter, wenn mehrere solche Katalysatorbleche zu einem Katalysatorkörper gewickelt oder gestapelt werden. Der Ätz- und Oxidationsvorgang, durch den die katalytisch aktive Oxidschicht mit hoher spezifischer Oberfläche hergestellt wird, kann dabei vor oder nach der mechanischen Fertigstellung des Katalysatorkörpers erfolgen.

## Patentansprüche

1. Verfahren zum Herstellen eines Katalysators zur Reduktion von Stickoxiden in Abgasen nach dem SCR-Verfahren, dadurch gekennzeichnet, daß der katalytisch aktive Bestandteil des Katalysators durch Oxidation eines wenigstens oberflächennahen Bereiches einer Titan und Vanadium enthaltenden metallischen Legierung hergestellt wird.

2. Verfahren zum Herstellen eines Katalysators nach Anspruch 1, dadurch gekennzeichnet, daß eine Legierung verwendet wird, bei der das Atomverhältnis der Komponente Vanadium zur Komponente Titan zwischen 0,002 und 0,2 beträgt.

3. Verfahren zum Herstellen eines Katalysators nach Anspruch 2, dadurch gekennzeichnet, daß die verwendete Legierung wenigstens ein Metall der Gruppe Zinn, Eisen, Kobalt, Chrom, Nickel und Uran enthält, und daß das Atomverhältnis der Gesamtzahl der Komponenten aus dieser Gruppe zur Komponente Titan in der Legierung zwischen 0,002 und 0,2 beträgt.

4. Verfahren zum Herstellen eines Katalysators nach einem der Ansprüche 1 bis 3, dadurch gekennzeichnet, daß die Legierung vor der Oxidation als dünne Schicht auf einem Träger angeordnet wird.

5. Verfahren zum Herstellen eines Katalysators nach Anspruch 4, dadurch gekennzeichnet, daß die Schichtdicke der verwendeten Legierung zwischen 10 μm und 200 μm beträgt.

6. Verfahren zum Herstellen eines Katalysators nach einem der Ansprüche 1 bis 5, dadurch gekennzeichnet, daß vor der wenigstens oberflächennahen Oxidation der metallischen Legierung deren Oberfläche durch Ätzen oder Sandstrahlen aufgerauht wird.

7. Verfahren zum Herstellen eines Katalysators nach einem der Ansprüche 4 bis 6, dadurch gekennzeichnet, daß die Legierung vor der Oxidations- und Ätzbehandlung als metallische Legierung mittels thermischer Spritzverfahren auf dem Träger aufgebracht wird.

8. Verfahren zum Herstellen eines Katalysators nach einem der Ansprüche 4 bis 7, dadurch gekennzeichnet, daß ein durch Ätzen oder Sandstrahlen aufgerauhter Träger verwendet wird, auf den als Haftgrund für die Legierung eine Aluminium-Flammspritzschicht aufgebracht ist.

## Claims

1. Process for the production of a catalyst for the reduction of nitrogen oxides in exhaust gases according to the SCR process, characterised in that the catalytically active component of the catalyst is produced by oxidation, at least near the surface, of an area of a metallic alloy containing titanium and vanadium.

2. Process for the production of a catalyst according to claim 1, characterised in that an alloy is used with which the atomic ratio of the vanadium component to the titanium component is between 0.002 and 0.2.

EP 0 211 443 B1

3. Process for the production of a catalyst according to claim 2, characterised in that the alloy used contains at least one metal of the group tin, iron, cobalt, chromium, nickel and uranium, and in that the atomic ratio of the total number of components from this group to the titanium component in the alloy is between 0.002 and 0.2.

4. Process for the production of a catalyst according to one of claims 1 to 3, characterised in that the alloy is arranged as a thin layer on a carrier before oxidation.

5. Process for the production of a catalyst according to claim 4, characterised in that the thickness of the layer of the alloy used is between 10μm and 200μm.

6. Process for the production of a catalyst according to one of claims 1 to 5, characterised in that before the oxidation, at least near the surface, of the metallic alloy its surface is roughened by etching or sand blasting.

7. Process for the production of a catalyst according to one of claims 4 to 6, characterised in that the alloy is applied to the carrier as a metallic alloy by means of a thermal spraying process before the oxidation and etching treatment.

8. Process for the production of a catalyst according to one of claims 4 to 7, characterised in that a carrier roughened by etching or sand blastingis used on which an aluminium flame spraying layer is applied as a basis for the alloy.

**Revendications**

1. Procédé de préparation d'un catalyseur pour la réduction des oxydes d'azote dans des effluents gazeux, suivant le procédé SCR, caractérisé en ce qu'il consiste à préparer le constituant catalytiquement actif du catalyseur en oxydant au moins une région, proche de la surface, d'un alliage métallique contenant du titane et du vanadium.

2. Procédé de préparation d'un catalyseur suivant la revendication 1, caractérisé en ce qu'il consiste à utiliser un alliage dans lequel le rapport atomique du constituant qu'est le vanadium au constituant qu'est le titane est compris entre 0,002, et 0,2.

3. Procédé de fabrication d'un catalyseur suivant la revendication 2, caractérisé en ce que l'alliage utilisé contient au moins un métal du groupe étain, fer, cobalt, chrome, nickel et uranium, et en ce que le rapport atomique du nombre total des constituants de ce groupe au constituant qu'est le titane est compris dans l'alliage entre 0,002 et 0,2.

4. Procédé de préparation d'un catalyseur suivant l'une des revendications 1 à 3, caractérisé en ce qu'il consiste à déposer l'alliage, avant l'oxydation, sous la forme d'une couche mince sur un support.

5. Procédé de préparation d'un catalyseur suivant la revendication 4, caractérisé en ce que l'épaisseur de couche de l'alliage utilisé est comprise entre 10 microns et 200 microns.

6. Procédé de préparation d'un catalyseur suivant l'une des revendications 1 à 5, caractérisé en ce qu'il consiste, avant l'oxydation au moins à proximité de la surface de l'alliage métallique, à rendre rugueuse sa surface par décapage ou par sablage.

7. Procédé de préparation d'un catalyseur suivant l'une des revendications 4 à 6, caractérisé en ce qu'il consiste à déposer l'alliage sur le support avant le traitement d'oxydation et de décapage sous la forme d'un alliage métallique, au moyen d'un procédé de projection thermique.

8. Procédé de préparation d'un catalyseur suivant l'une des revendications 4 à 7, caractérisé en ce qu'il consiste à utiliser un support rendu rugueux par décapage ou par sablage sur lequel est déposée, comme couche de base de l'alliage, une couche d'aluminium obtenue par schoopage.